# FASCICULE DE BREVET EUROPEEN

(11) **EP 1 697 466 B1**
(45) Date de publication et mention de la délivrance du brevet: **27.02.2013**
(21) Numéro de dépôt: 04816556.7
(22) Date de dépôt: 16.12.2004
(51) Int. Cl.: C08L 95/00, E01C 7/18

(54) **COMPOSITIONS BITUMINEUSES, PROCEDE DE PREPARATION ET MATERIAU ROUTIER**
BITUMINÖSE ZUSAMMENSETZUNGEN, HERSTELLUNGSVERFAHREN DAFÜR UND STRASSENMATERIAL
BITUMINOUS COMPOSITIONS, METHOD FOR PRODUCING THE SAME, AND ROAD MATERIAL

(30) Priorité: 19.12.2003 FR 0351127
(43) Date de publication de la demande: 06.09.2006
(73) Titulaire: TOTAL RAFFINAGE MARKETING, 92800 Puteaux (FR)
(72) Inventeur: PLANCHE, Jean-Pascal, F-38540 St Just Chaleyssin (FR); MARIOTTI, Sophie, F-69002 Lyon (FR); NAVARRO, Christophe, F-64990 Lahonce (FR); LESUEUR, Didier, E-28320 Pinto (Madrid) (ES)
(74) Mandataire: Cabinet Plasseraud
(86) Numéro de dépôt international: PCT/FR2004/050703
(87) Numéro de publication internationale: WO 2005/061624

(56) Documents cités:
- EP-A- 0 409 097
- EP-A- 0 637 599
- EP-A- 1 057 873
- EP-A- 1 111 009
- WO-A-03/049848
- US-A- 4 523 957
- US-A- 4 755 563
- US-A- 5 182 331

## Description

La présente invention concerne des compositions bitumineuses, usuellement appelés liants bitumineux, pour applications routières et applications industrielles. Elle concerne en particulier les compositions manipulables à température ambiante comme les émulsions de bitume pur ou modifié, utiles pour la réalisation de matériaux et de revêtements routiers, par exemple des enrobés bitumineux et des enduits superficiels. L'invention concerne également des procédés associés.

Le bitume est un produit lourd pouvant être issu de différentes origines. Il peut notamment être issu de la fraction la plus visqueuse produite lors de la distillation directe de pétrole brut. La composition du bitume est variable et dépend de l'origine du pétrole brut. Les bitumes comprennent essentiellement des huiles saturées, des huiles aromatiques, des résines, appelées maltènes, et des asphaltènes. Pour plus d'informations, on peut utilement se reporter par exemple au brevet européen EP-B-0 246 956.

Le bitume est un matériau colloïdal dont le comportement rhéologique est de type viscoélastique. La composition d'un bitume influe considérablement sur sa structure et ainsi, sur ses propriétés mécaniques et thermiques.

L'utilisation du bitume pour la fabrication de matériaux pour applications routières et industrielles est connue de longue date. Cependant, du fait de la viscosité élevée du bitume à température ambiante, sa mise en oeuvre est problématique. Plusieurs techniques visant à diminuer la viscosité du bitume ont été développées, afin de résoudre ce problème. Dans le cas d'applications à chaud, le bitume est porté à une température élevée, supérieure à 160°C, ce qui permet de diminuer sa viscosité. Cependant, ces techniques sont fortement consommatrices d'énergie (stockage, transport des bitumes). Elles entraînent en outre une exposition des applicateurs aux vapeurs de bitume et au bitume chaud, portés à des températures élevées.

Une technique dite « à froid », en l'occurrence à des températures proches de 60°C, consiste à préparer une émulsion de bitume, de type huile dans l'eau, en utilisant un agent tensioactif approprié. En fonction des utilisations, divers agents

tensioactifs sont mis en oeuvre : anioniques, cationiques, amphotères ou non-ioniques, éventuellement en combinaison.

La demande EP-A-1 111 009 divulgue des émulsions bitumineuses et des émulsifiants utiles pour la préparation de telles émulsions. Plus précisément, ces émulsifiants sont des polyamines et des polymères cationique, ajoutés séparément l'un de l'autre lors de la préparation de l'émulsion bitumineuse

Par exemple, la demande de brevet français FR-A-2 769 917 (KAO Corp.) concerne un procédé pour émulsionner un asphalte à l'aide d'agents tensioactifs non-ioniques de type éther de polyoxyéthylène. Par ailleurs, ce document indique diverses familles d'agents tensioactifs envisageables. Il propose d'utiliser indistinctement des tensioactifs anioniques tels que des acides gras, des alkylsulfates ou des sels d'acides alkylphosphoriques, des tensioactifs cationiques tels que des sels d'acides minéraux, des sels d'acides carboxyliques inférieurs, ou des sels d'ammonium quaternaire ou d'amines, ou bien encore des tensioactifs amphotères tels que des dérivés de bétaïne.

Dans le cas de la préparation d'enrobés bitumineux, lorsque l'émulsion bitumineuse est mise en contact avec les granulats, elle se rompt, à savoir que la phase bitume se sépare de la phase aqueuse. Il est important donc de pouvoir contrôler cette rupture, en particulier sa vitesse, car elle détermine notamment la bonne adhérence des granulats et du revêtement routier.

Le choix de l'agent tensioactif en fonction du ou des bitumes utilisés influe sur l'ensemble des propriétés de l'émulsion comme par exemple sa rupture ainsi que sa stabilité au cours du stockage.

Par ailleurs, le revêtement routier réalisé doit présenter une bonne résistance aux conditions de trafic et climatiques. En particulier, il doit résister à l'orniérage tout en ayant un comportement satisfaisant aux basses températures, notamment un faible risque de fissuration thermique et/ou de fatigue.

Il est en outre connu de modifier le liant bitumineux en mélangeant au bitume au moins un composé pouvant être de type polymère, en vue d'améliorer ses performances mécaniques et thermiques. Un point important à résoudre est alors celui de la compatibilité du bitume et du polymère mis en oeuvre. En pratique, on définit la compatibilité comme une situation où le bitume et le polymère peuvent se combiner pour former un produit dont les propriétés sont améliorées et qui ne nécessite pas de précautions de manipulation importantes. En d'autres termes, on souhaite éviter une démixtion du bitume et du polymère à l'échelle macroscopique.

En ce qui concerne les mélanges physiques, dans le domaine routier, on utilise en particulier les élastomères et les plastomères comme polymère. Par exemple, comme cela est enseigné dans la demande de brevet européen EP-A-1 010 729, au nom de la demanderesse, on incorpore un copolymère séquencé de type styrène-butadiène-styrène (SBS) dans un rapport de 3 à 6% en poids du poids total de la composition.

Il apparaît donc que les compositions bitumineuses, et en particulier les émulsions, peuvent comprendre plusieurs additifs et/ou composés destinés à leur conférer des propriétés fonctionnelles.

Pour minimiser l'utilisation de plusieurs additifs et/ou agents sans exclure pour autant leur utilisation, la Demanderesse a mis au point de nouvelles compositions bitumineuses, en particulier des émulsions, comprenant un agent polymère tensioactif jouant à la fois le rôle d'agent tensioactif pour la mise en émulsion et le rôle d'additif fonctionnel, destiné à conférer voire améliorer les propriétés mécaniques et thermiques compatibles avec une utilisation industrielle ou routière, notamment pour la réalisation de revêtements routiers "à froid".

L'utilisation de ce nouvel agent tensioactif dans la composition selon l'invention (e.g. une émulsion) permet de simplifier le procédé de préparation d'une telle composition (e.g. émulsion) ainsi que le procédé de réalisation d'un revêtement industriel ou d'un revêtement routier à l'aide de celle-ci.

Un autre objectif de l'invention est de proposer des compositions bitumineuses, en particulier des émulsions, pouvant être appliquées à froid pour la réalisation de revêtements routiers. Cela implique donc une viscosité suffisamment faible aux températures d'application, mais également suffisamment élevée pour que la composition bitumineuse ne s'écoule pas en dehors de la zone d'application. Cela implique également une stabilité au stockage satisfaisante en termes de durée et de température de stockage.

Un objectif de l'invention est également de fournir des émulsions bitumineuses dont la rupture est maîtrisée.

Un autre objectif de l'invention est de proposer des revêtements routiers et des compositions utiles pour la fabrication de tels revêtements, dont les propriétés mécaniques et thermiques sont telles que ces revêtements sont peu sensibles à l'orniérage, à la fissuration et aux fortes variations saisonnières de température.

Encore un objectif de l'invention est de maintenir de bonnes performances sous trafic du revêtement routier préparé à l'aide de la composition selon l'invention, notamment en terme de durée de vie du revêtement.

Un objectif supplémentaire de l'invention est de fournir des compositions bitumineuses, notamment des émulsions, en particulier pour des applications routières, dont les températures d'applications sont réduites et permettent aux applicateurs d'éviter une exposition aux fumées et vapeurs de bitume.

Ainsi, il est du mérite des inventeurs d'avoir développé des compositions bitumineuses comprenant un agent polymère tensioactif dont le rôle est de mettre le bitume en émulsion, d'améliorer les performances du liant résiduel obtenu après rupture et de s'affranchir des problèmes de compatibilité entre le bitume et le polymère, tout en répondant aux diverses contraintes d'application et de service.

La présente invention propose donc en premier lieu des compositions bitumineuses, usuellement appelés liants bitumineux, (e.g. émulsions bitumineuses) utilisables pour la préparation de matériaux routiers, un procédé de préparation d'émulsions bitumineuses et un procédé de fabrication d'un enduit superficiel routier comprenant au moins un bitume modifié ou non modifié (par exemple par un polymère au moins un polymère, caractérisée en ce qu'elle comprend en outre au moins un agent polymère tensioactif cationique **TC.**

Le ou les agents tensioactifs cationiques **TC** visés comprennent au moins un copolymère séquencé **Cp** choisi parmi les copolymères séquencés comportant au moins deux blocs **A** et **B** reliés entre eux, chaque bloc étant soit un homopolymère, soit un copolymère obtenu à partir de deux ou plusieurs monomères différents.

Le bloc **A** comporte au moins un segment hydrophile. Ledit bloc **A** est obtenu au moins à partir de monomères **a,** identiques ou différents entre eux et comportant au moins un atome d'azote ionisé ou ionisable en milieu acide.

Avantageusement, le ou les segments hydrophiles sont obtenus à partir de monomères **a.** De préférence, ledit bloc **A** est obtenu à partir de monomères **a,** c'est-à-dire qu'il est essentiellement constitué d'unités dérivant de monomères **a,** identiques ou différents entre eux et comportant au moins un atome d'azote ionisé ou ionisable en milieu acide.

Le bloc **B** comporte au moins un segment hydrophobe pouvant être partiellement ou totalement hydrogéné. Ledit bloc **B** est obtenu au moins à partir de monomères **b,** identiques ou différents entre eux et choisis parmi *(i)* les diènes, notamment butadiène, isoprène, substitués ou non.

Avantageusement, le ou les segments hydrophobes sont obtenus à parti de monomères **b.** De préférence, ledit bloc **B** est obtenu à partir de monomères **b,** c'est-à-dire qu'il est constitué d'unités dérivant de monomères **b,** identiques ou différents entre eux et choisis parmi les monomères *(i)* ci-dessus.

La liaison entre le bloc **A** et le bloc **B** est effectuée soit au moyen d'une liaison covalente directe entre les blocs, soit au moyen d'une liaison moléculaire intermédiaire reliée à l'un de ces blocs par une première liaison covalente et à l'autre bloc par une seconde liaison covalente. Par exemple, le bloc **A** peut être relié au bloc **B** par la liaison moléculaire produite par l'utilisation de 1,1-diphényléthylène, ou par l'intermédiaire d'un oligomère résultant d'un enchaînement d'unités monomères d'au moins deux monomères différents (ordre alterné ou aléatoire). Dans le cas d'un oligomère, celui-ci peut avantageusement être obtenu à partir de monomères **a** et **b.**

Outre un copolymère **Cp** comportant au moins deux blocs **A** et **B** reliés entre eux, l'agent tensioactif cationique **TC** peut contenir, comme produit(s) secondaire(s) issu(s) de la synthèse dudit copolymère **Cp,** éventuellement des espèces homopolymère **A** et/ou homopolymère **B.**

Avantageusement, le(s) monomère(s) **a** est(sont) sélectionné(s) dans le groupe comprenant :
- les (méth)acrylates d'alkylamines, d'arylamines, d'alkylammonium, d'arylammonium, et d'alkylarylammonium, et plus particulièrement les méthacrylates de trialkylamine ;
- les (méth)acrylates de dialkylaminoéthyle, et plus particulièrement le méthacrylate de N,N-diméthylaminoéthyle ;
- les (méth)acrylamides et leurs dérivés tels que la N-méthylolacrylamide ;
- et leurs mélanges.

Les monomères **a** constitués d'acrylate et de méthacrylate répondent à la formule générale suivante : 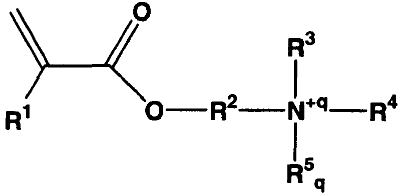 où :
- R¹ représente un atome d'hydrogène ou un groupe méthyle,
- R², radical divalent, représente un groupe alkyle, linéaire ou ramifié, comportant 1 à 18 atomes de carbone, ou un groupe cycloalkyle comportant 3 à 10 atomes de carbone, ou un groupe aryle comportant 3 à 10 atomes de carbone, ou un groupe alkyle-cycloalkyle comportant 3 à 18 atomes de carbone dont la partie cycloalkyle comporte 3 à 10 atomes de carbone, ou un groupe arylalkyle comportant 3 à 18 atomes de carbone dont la partie aryle comporte 3 à 10 atomes de carbone, ledit radical pouvant être substitué ou non substitué ;
- R³, R⁴ et R⁵, radicaux monovalents, représentent indépendamment les uns des autres, un atome d'hydrogène ou un groupe alkyle, linéaire ou ramifié, comportant 1 à 18 atomes de carbones, ou un groupe cycloalkyle comportant 3 à 10 atomes de carbone, ou un groupe aryle comportant 3 à 10 atomes de carbone, ou un groupe alkyle-cycloalkyle comportant 3 à 18 atomes de carbone dont la partie cycloalkyle comporte 3 à 10 atomes de carbone, ou un groupe arylalkyle comportant 3 à 18 atomes de carbone dont la partie aryle comporte 3 à 10 atomes de carbone, lesdits radicaux pouvant être, le cas échéant, substitués ou non substitués, et q vaut 0 ou 1 ;
- ou bien R³ représente un atome d'hydrogène et R⁴ représente un groupe carbonyle formant un groupe amide avec l'atome d'azote, linéaire ou ramifié, comportant 1 à 18 atomes de carbone, et q vaut 0.

Préférentiellement, R², radical divalent, représente un groupe alkyle, linéaire ou ramifié, comportant 1 à 18 atomes de carbone, ou un groupe cycloalkyle comportant 3 à 6 atomes de carbone, ou un groupe aryle comportant 3 à 6 atomes de carbone, ledit radical pouvant être substitué ou non substitué ; et/ou R³, R⁴ et R⁵, radicaux monovalents, représentent indépendamment les uns des autres, un atome d'hydrogène ou un groupe alkyle, linéaire ou ramifié, comportant 1 à 18 atomes de carbones, ou un groupe cycloalkyle comportant 3 à 6 atomes de carbone, ou un groupe aryle comportant 3 à 6 atomes de carbone, lesdits radicaux pouvant être, le cas échéant, substitués ou non substitués, et q vaut 0 ou 1.

En général, les monomères **a** utilisés pour former le bloc **A** sont polymérisés par voie anionique.

Les monomères **b** sélectionnés sont polymérisables par voie classique connue de l'homme du métier, et avantageusement, par voie anionique.

De préférence, les monomères **b** sont choisis parmi les diènes, identiques ou différents entre eux, substitués ou non.

Plus préférentiellement, le monomère **b** est un diène conjugué, c'est-à-dire que les deux doubles liaisons sont séparées par une simple liaison au sein de la molécule de monomère. En particulier, le monomère **b** est sélectionné dans le groupe comprenant le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbomène, les 2-alkyl-2,5-norbomadiènes, le 5-éthylène-2-norbomène, le 5-(2-propényl)-2-norbomène, le 5-(5-hexényl)-2-norbomène et leurs mélanges. Le butadiène est particulièrement préféré.

Le copolymère tensioactif **Cp** possède un degré de polymérisation DP compris entre, selon un ordre croissant de préférence, au moins 100, 150, 170, 180 ou 200, et indépendamment, selon un ordre croissant de préférence, au plus 5000, 3000, 2500, 2100 ou 2000. Avantageusement, le copolymère tensioactif **Cp** possède un degré de polymérisation DP compris entre 100 et 5000, de préférence entre 150 et 3000.

Avantageusement, le copolymère **Cp** est un copolymère dibloc ou tribloc, comprenant au moins un bloc **A** et au moins un bloc **B.** En particulier, le copolymère **Cp** est un copolymère dibloc **A-B,** ou un copolymère tribloc **A-B-A** ou **B-A-B.**

Plus particulièrement, le copolymère dibloc **A-B** répond à la formule **Aᵢ-Bⱼ,** et le copolymère tribloc **A-B-A** et **B-A-B** répond respectivement à la formule **Aᵢ-Bⱼ**-**Aₖ** et à la formule **Bⱼ-Aᵢ-Bₗ,** où :
- i et k sont compris entre, selon un ordre croissant de préférence, au moins 50, 100, 125, 140, 145 ou 150, et indépendamment, selon un ordre croissant de préférence, au plus 800, 600, 550, 525 ou 500,
- et j et I sont compris entre, selon un ordre croissant de préférence, au moins 150, 300, 320, 345 ou 350, et indépendamment, selon un ordre croissant de préférence, au plus 850, 700, 680, 660 ou 650.

Avantageusement, i et k sont compris entre 50 et 800, de préférence entre 100 et 600, et, j et I sont compris entre 150 et 850, de préférence entre 300 et 700.

La synthèse du copolymère tensioactif **Cp** peut être réalisée selon différents modes opératoires connus de l'homme du métier tels que ceux décrits dans les brevets européens EP-B-0 749 987, EP-B-0 722 958 et/ou EP-B-0 524 054. On peut notamment dans une première étape préparer le bloc ***B*** puis ensuite réaliser au sein du même milieu réactionnel la polymérisation des monomères a pour former le bloc **A** lié au bloc **B.**

Les copolymères tensioactifs **Cp** décrits ci-avant comprennent donc des zones hydrophiles issues du bloc **A,** ionisés ou ionisables en milieu acide, ainsi que des zones blocs hydrophobes issues du bloc **B** ayant un caractère aliphatique.

En milieu aqueux, les zones hydrophiles interagissent avec l'eau, notamment par l'intermédiaire de liaisons faibles de type liaisons hydrogène, et se trouvent ainsi au moins partiellement solubilisées tandis que les zones hydrophobes possèdent une grande affinité pour les bitumes. Ainsi, le copolymère tensioactif peut faciliter la mise en émulsion des bitumes dans l'eau.

De préférence, la composition conforme à l'invention est constituée par une émulsion aqueuse comprenant :
- un agent tensioactif **TC**, présent en un pourcentage massique, selon un ordre croissant de préférence, supérieur à 0,1%, 0,2 %, 0,25% ou 0,3%, et indépendamment, selon un ordre croissant de préférence, inférieur à 20 %, 8%, 2%, 1 % ou 0,5%,
- un bitume, présent en un pourcentage massique, selon un ordre croissant de préférence, supérieur à 20 %, 40 %, 50 % ou 55 %, et indépendamment, selon un ordre croissant de préférence, inférieur à 90 %, 80 %, 70 % ou 65 %,
- au moins 10 % en masse d'eau, la somme des pourcentages étant égale à 100.

En particulier, ladite émulsion aqueuse comprend :
- 0,1 à 20 %, de préférence 0,2 à 8 % et plus préférentiellement 0,3 à 0,5 % en masse d'agent tensioactif **TC**,
- 20 à 90 %, de préférence 50 à 80 % et plus préférentiellement 55 à 65 % en masse de bitume,
- au moins 10 % en masse d'eau, la somme des pourcentages étant égale à 100.

En général, le pH de l'émulsion bitumineuse est compris entre 2 et 6,5, de préférence compris entre 4 et 6.

Une autre propriété de l'émulsion bitumineuse conforme à l'invention est de posséder une rupture rapide adaptée et adaptable aussi bien pour les applications routières que pour les applications industrielles.

Par ailleurs, l'émulsion bitumineuse est caractérisée par une stabilité au stockage supérieure à 24 heures selon la norme NF EN 12847.

Une émulsion bitumineuse conforme à l'invention présente en outre une pseudo-viscosité STV à 25°C comprise entre 2 et 200 secondes telle que définie par la norme NF T66-020.

Le bitume utilisé au sein des compositions selon l'invention peut être utilisé non modifié ou modifié. Pour modifier le bitume, on peut utiliser au moins un polymère choisi notamment dans le groupe comprenant :
- les homopolymères et copolymères oléfiniques d'éthylène, propylène, butylène, hexène, 4-méthyl-1-pentène,
- les élastomères telles que l'éthylène propylène diène monomère (EPDM), l'éthylène propylène monomère (EPM), le polyisobutylène, le polybutadiène, le polyisoprène,
- les élastomères thermoplastiques comme les copolymères statistiques ou séquencés de styrène et de butadiène, linéaire ou en étoile (SBR, SBS) ou de styrène et d'isoprène (SIS), éventuellement réticulés,
- le poly(chlorure de vinyle),
- et les copolymères d'éthylène et d'acétate de vinyle.

Ce polymère supplémentaire peut représenter de 0,5 à 20 % en masse de la masse de bitume.

Il est également envisageable de mélanger à la composition selon l'invention un agent tensioactif supplémentaire, en plus de l'agent tensioactif **TC** tel que défini ci-dessus. Il s'agit par exemple d'utiliser des tensioactifs cationiques tels que des sels d'acides minéraux, des sels d'acides carboxyliques inférieurs, ou des sels d'ammonium quaternaire ou d'amines, ou bien encore des tensioactifs amphotères.

D'autres additifs usuels, connus de l'homme du métier, peuvent avantageusement être ajoutés à la composition selon l'invention.

En outre, l'invention est relative à un procédé de préparation d'une émulsion bitumineuse comprenant les étapes consistant à :
a) dissoudre dans une phase aqueuse acide au moins partiellement au moins un agent tensioactif **TC**,
b) puis ajouter au moins un bitume éventuellement modifié par au moins un polymère.

On chauffe la phase aqueuse à une température comprise entre 20 et 120°C, de préférence entre 40 et 80°C et mieux encore entre 55 et 65°C, préalablement à l'incorporation de bitume, et notamment pendant la dissolution de l'agent **TC** dans la phase aqueuse. Avantageusement, la température est choisie sensiblement égale à 60°C.

De préférence, le bitume destiné à être incorporé dans la phase aqueuse, est porté à une température comprise entre 80 et 200°C, de préférence comprise entre 100 et 150°C et plus préférentiellement encore, entre 135 et 145°C. Selon une mise en oeuvre particulière, la température est sélectionnée proche de 140°C.

Un autre aspect de l'invention concerne la fabrication d'enrobés bitumineux, de préférence à froid, utilisables notamment dans l'industrie routière, à l'aide d'une émulsion telle que définie ci-avant en mélange avec des granulats.

Dans la technique routière, on destine ces enrobés bitumineux à la construction et l'entretien des corps de chaussées et de leurs revêtements, et à la réalisation de tous travaux de voirie. Ils sont composés de granulats minéraux, en majorité de nature siliceuse (silex, quartzites, granit) ou silico-calcaire, et de liants bitumineux.

Outre les applications dans le domaine des enrobés bitumineux, la composition bitumineuse selon l'invention, plus particulièrement sous sa forme émulsion, peut être utilisée pour ou dans d'autres applications routières ou industrielles, par exemple dans ou pour la réalisation d'un enduit industriel ou d'un enduit superficiel routier, lesquels font également partie de l'invention.

Par exemple, la fabrication d'un enduit superficiel routier comprend les étapes suivantes, éventuellement répétées. On commence par déposer une couche de la composition bitumineuse sur un tapis routier à une température comprise entre 50 et 70°C, puis on dépose une couche de granulats routiers, de préférence silico-calcaires, puis on compacte les couches afin de répartir uniformément les granulats au sein du liant.

L'invention concerne également un tensioactif polymère cationique **TC** à base d'au moins un copolymère séquence **Cp** tel que défini ci-dessus, ainsi que l'utilisation d'un copolymère séquencé **Cp** comme agent tensioactif.

En particulier, l'invention concerne l'utilisation d'un tensioactif polymère cationique **TC** à base d'au moins un copolymère séquencé **Cp** choisi parmi les copolymères séquencés comportant au moins deux blocs **A** et **B** reliés entre eux,
le bloc **A** comportant au moins un segment hydrophile, ledit bloc **A** étant obtenu au moins à partir de monomères **a,** identiques ou différents entre eux et comportant au moins un atome d'azote ionisé ou ionisable en milieu acide et,
le bloc **B** comportant au moins un segment hydrophobe pouvant être partiellement ou totalement hydrogéné, ledit bloc **B** étant obtenu au moins à partir de monomères **b,** identiques ou différents entre eux et choisis parmi *(i)* les diènes, notamment butadiène, isoprène, substitués ou non, pour la préparation d'une composition bitumineuse.

### EXEMPLES

Les exemples suivants illustrent la présente invention sans toutefois en limiter la portée. Dans les exemples suivants, la masse molaire moyenne en nombre de la séquence PB a été déterminée par chromatographie d'exclusion stérique (CES), après prélèvement de cette séquence en cours d'expérience.

Les fractions massiques en PB, PMADMAE et P(2-VP) ont été déterminées par RMN du proton. La masse molaire totale a été calculée à partir des deux déterminations précédentes.

Le produit contient une fraction d'homopolybutadiène (PB), cette fraction résulte d'une efficacité de séquençage non quantitative dans les conditions de synthèse utilisée.

### Exemple 1: Synthèse du copolymère tensioactif Cp1 polyMADMAE-block-polyBD.

La synthèse se fait sous atmosphère inerte dans un réacteur et sous agitation.

Dans 500 g d'éthylbenzène préalablement purifié (c'est-à-dire débarrassé de toute impureté protique) sont successivement introduits : 0,98 g de solution de sec-butyllithium 1,6 M (amorceur) puis 82 g de butadiène. La température du réacteur est portée à 50°C, et la polymérisation du butadiène est réalisée en 3 heures.

Après dégazage du milieu, le milieu est refroidi à une température inférieure à 0°C et 200 g d'une solution d'éthylbenzène contenant du 1,1-diphényléthylène (2 équivalents molaires / mole d'amorceur), ainsi que du 2-méthoxyéthanolate de lithium (5 équivalents molaires / mole d'amorceur) sont ajoutés.

Ensuite, 30 g de MADMAE (méthacrylate de *N,N*-diméthylaminoéthyle) purifié par passage sur tamis est additionné et polymérise en environ 1 seconde.

On obtient 60 g de copolymère **Cp1** d'une masse molaire de 91,6 kg/mol, constitué de 76 % en masse de polyMADMAE et de 24 % en masse de polyBD.

### Exemple 2 comparatif: Synthèse du copolymère tensioactif Cp2 poly(2-VP)-block-polyBD.

La synthèse se fait sous atmosphère inerte dans un réacteur et sous agitation.

Dans 500 g d'éthylbenzène préalablement purifié (c'est-à-dire débarrassé de toute impureté protique) sont successivement introduits : 0,90 g de solution de sec-butyllithium 1,6 M (amorceur) puis 66 g de butadiène. La température du réacteur est portée à 50°C, et la polymérisation du butadiène est réalisée en 3 heures.

Après dégazage, le milieu est refroidi à une température inférieure à 20°C et 200 g d'une solution de THF (tétrahydrofurane) contenant du 1,1-diphényléthylène (2 équivalents molaires/mole d'amorceur), ainsi que du chlorure de lithium (2 équivalents molaires / mole d'amorceur) sont ajoutés.

Ensuite, 64 g de 2-VP (2-vinylpyridine) préalablement purifié par passage sur tamis est additionné et polymérise en environ 1 seconde.

On obtient 76 g de copolymère **Cp2** d'une masse molaire de 71 kg/mol, constitué de 75 % en masse de poly(2-VP) et de 25 % en masse de polyBD.

### Exemple 3: Propriétés en solution aqueuse du copolymère Cp1.

10 g/L de copolymère **Cp1** ont été solubilisés dans une solution aqueuse de HCl à 0,1 M. La solution finale d'aspect turbide est fluide et de pH compris entre 1,2 à 1,4. La tension superficielle à l'équilibre, c'est-à-dire après 2 minutes, est de 60 mN/m.

### Exemple 4: Emulsion bitume-copolymère avec copolymère Cp1.

Pour la fabrication de l'émulsion, un bitume Total 160/220 a été mélangé à 140°C dans la phase aqueuse portée à 60°C au sein d'un moulin colloïdal Moritz.

L'émulsion a été testée après un stockage de 24 heures à l'issue de laquelle la rupture peut avoir lieu. Dans le cas contraire, les essais courants sont réalisés selon les normes d'essais en vigueur. Les résultats des essais sont indiqués dans le tableau suivant.

| | | | Emulsion |
|---|---|---|---|
| Bitume | | % mas. | 60 |
| Teneur en Cp1 | | % mas. | 0,33 |
| pH phase aqueuse | | | 2,3 |
| Stabilité 24 heures, 25°C | | | Oui |
| Stabilité 24 heures, 60°C | | | Oui |
| pH émulsion | NF EN 12850 | | 5,0 |
| Pseudoviscosité STV 4mm 25°C | NF T66-020 | S | 72 |
| Résidu 630µm | NF T66-016 | % | 0,1 |
| IREC | NF EN 13075 | g/100 g | 60 |

## Revendications

1. Composition bitumineuse comprenant au moins un bitume modifié ou non modifié, **caractérisée en ce qu'**elle comprend au moins un agent polymère tensioactif cationique **TC** comprenant au moins un copolymère séquencé **Cp** choisi parmi les copolymères séquencés comportant au moins deux blocs **A** et **B** reliés entre eux,
le bloc **A** comportant au moins un segment hydrophile, ledit bloc **A** étant obtenu au moins à partir de monomères **a,** identiques ou différents entre eux, comportant au moins un atome d'azote ionisé ou ionisable en milieu acide, et sélectionné(s) dans le groupe comprenant :
- les (méth)acrylates d'alkylamines, d'arylamines, d'alkylammonium, d'arylammonium et d'alkylarylammonium;
- les (méth)acrylates de dialkylaminoéthyle;
- les (méth)acrylamides et leurs dérivés, et leurs mélanges, et,
le bloc **B** comportant au moins un segment hydrophobe pouvant être partiellement ou totalement hydrogéné, ledit bloc **B** étant obtenu au moins à partir de monomères **b,** identiques ou différents entre eux et choisis parmi les diènes, substitués ou non,
la liaison entre le bloc **A** et le bloc **B** étant effectuée soit au moyen d'une liaison covalente directe entre les blocs, soit au moyen d'une liaison moléculaire intermédiaire reliée à l'un de ces blocs par une première liaison covalente et à l'autre bloc par une seconde liaison covalente,
la composition étant sous forme d'émulsion aqueuse.

2. Composition bitumineuse selon l'une des revendications 1, **caractérisée en ce que** les monomères **a** constitués d'acrylate et de méthacrylate répondent à la formule générale suivante : 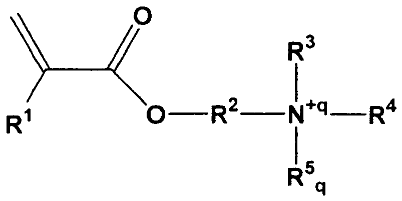 où :
- R¹ représente un atome d'hydrogène ou un groupe méthyle ;
- R², radical divalent, représente un groupe alkyle, linéaire ou ramifié, comportant 1 à 18 atomes de carbone, un groupe cycloalkyle comportant 3 à 10 atomes de carbone, un groupe aryle comportant 3 à 10 atomes de carbone, un groupe alkyle-cycloalkyle comportant 3 à 18 atomes de carbone dont la partie cyclalkyle comporte 3 à 10 atomes de carbone, ou un groupe arylalkyle comportant 3 à 18 atomes de carbone dont la partie aryle comporte 3 à 10 atomes de carbone, ledit radical pouvant être substitué ou non substitué ;
- R³, R⁴ et R⁵, radicaux monovalents, représentent indépendamment les uns des autres, un atome d'hydrogène ou un groupe alkyle, linéaire ou ramifié, comportant 1 à 18 atomes de carbones, un groupe cycloalkyle comportant 3 à 10 atomes de carbone, ou un groupe aryle comportant 3 à 10 atomes de carbone, un groupe alkyle-cycloalkyle comportant 3 à 18 atomes de carbone dont la partie cycloalkyle comporte 3 à 10 atomes de carbone, ou un groupe arylalkyle comportant 3 à 18 atomes de carbone dont la partie aryle comporte 3 à 10 atomes de carbone, lesdits radicaux pouvant être substitués ou non substitués, et q vaut 0 ou 1 ;
- ou bien R³ représente un atome d'hydrogène et R⁴ représente un groupe carbonyle formant un groupe amide avec l'atome d'azote, linéaire ou ramifié, comportant 1 à 18 atomes de carbone, et q vaut 0.

3. Composition bitumineuse selon l'une des revendications 1 ou 2, **caractérisée en ce que** le monomère **b** est un diène conjugué.

4. Composition bitumineuse selon la revendication 34, **caractérisée en ce que** le monomère **b** est sélectionné dans le groupe comprenant le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-hexényl)-2-norbornène et leurs mélanges.

5. Composition bitumineuse selon l'une quelconque des revendications 1 à 4, **caractérisée en ce que** le copolymère tensioactif **Cp** possède un degré de polymérisation DP compris entre 100 et 5000.

6. Composition bitumineuse selon l'une quelconque des revendications 1 à 5, **caractérisée en ce que** le copolymère **Cp** est un copolymère dibloc ou tribloc, comprenant au moins un bloc **A** et au moins un bloc **B.**

7. Composition bitumineuse selon la revendication 6, **caractérisée en ce que** le copolymère dibloc **A-B** répond à la formule **A**ᵢ**-B**ⱼ**,** et le copolymère tribloc **A-B-A** et **B-A-B** répond respectivement à la formule **A**ᵢ**-B**ⱼ**-A**ₖ et à la formule **B**ⱼ-**A**ᵢ-**B**ₗ, où :
- i et k sont compris entre 50 et 800, et,
- j et I sont compris entre 150 et 850,

8. Composition bitumineuse selon l'une quelconque des revendications 1 à 7, **caractérisée en ce que** le bitume au sein de la composition est modifié par au moins un polymère choisi notamment dans le groupe comprenant :
- les homopolymères et copolymères oléfiniques d'éthylène, propylène, butylène, hexène, 4-méthyl-1-pentène ;
- les élastomères telles que l'éthylène propylène diène monomère (EPDM), l'éthylène propylène monomère (EPM), le polyisobutylène, le polybutadiène, le polyisoprène ;
- les élastomères thermoplastiques comme les copolymères statistiques ou séquencés de styrène et de butadiène, linéaire ou en étoile (SBR, SBS) ou de styrène et d'isoprène (SIS), éventuellement réticulés ;
- le poly(chlorure de vinyle) ;
- et les copolymères d'éthylène et d'acétate de vinyle.

9. Composition bitumineuse selon l'une quelconque des revendications 1 à 8, **caractérisée en ce que** l'émulsion comprend :
- 0,1 à 20 %, en masse d'agent tensioactif **TC**,
- 20 à 90 %, en masse de bitume,
- au moins 10 % en masse d'eau,
la somme des pourcentages étant égale à 100 %.

10. Procédé de préparation d'une émulsion bitumineuse selon l'une quelconque des revendications 1 à 9, comprenant les étapes consistant à :
a) dissoudre dans une phase aqueuse acide au moins partiellement au moins un agent tensioactif TC comprenant au moins un copolymère séquencé Cp choisi parmi les copolymères séquencés comportant au moins deux blocs A et B reliés entre eux,
le bloc A comportant au moins un segment hydrophile, ledit bloc A étant obtenu au moins à partir de monomères a, identiques ou différents entre eux, comportant au moins un atome d'azote ionisé ou ionisable en milieu acide, et sélectionné(s) dans le groupe comprenant :
- les (méth)acrylates d'alkylamines, d'arylamines, d'alkylammonium, d'arylammonium et d'alkylarylammonium;
- les (méth)acrylates de dialkylaminoéthyle;
- les (méth)acrylamides et leurs dérivés, et leurs mélanges, et,
le bloc **B** comportant au moins un segment hydrophobe pouvant être partiellement ou totalement hydrogéné, ledit bloc **B** étant obtenu au moins à partir de monomères b, identiques ou différents entre eux et choisis parmi les diènes, substitués ou non,
la liaison entre le bloc **A** et le bloc **B** étant effectuée soit au moyen d'une liaison covalente directe entre les blocs, soit au moyen d'une liaison moléculaire intermédiaire reliée à l'un de ces blocs par une première liaison covalente et à l'autre bloc par une seconde liaison covalente,
b) puis ajouter au moins un bitume modifié ou non modifié.

11. Enrobés bitumineux, de préférence à froid, à base d'un mélange de granulats et d'au moins une composition selon l'une quelconque des revendications 1 à 9.

12. Enduit bitumineux à base d'au moins une composition selon l'une quelconque des revendications 1 à 9.

13. Utilisation d'un tensioactif polymère cationique **TC** à base d'au moins un copolymère séquencé **Cp** choisi parmi les copolymères séquencés comportant au moins deux blocs **A** et **B** reliés entre eux,
le bloc **A** comportant au moins un segment hydrophile, ledit bloc **A** étant obtenu au moins à partir de monomères **a,** identiques ou différents entre eux, comportant au moins un atome d'azote ionisé ou ionisable en milieu acide et sélectionné(s) dans le groupe comprenant :
- les (méth)acrylates d'alkylamines, d'arylamines, d'alkylammonium, d'arylammonium et d'alkylarylammonium;
- les (méth)acrylates de dialkylaminoéthyle;
- les (méth)acrylamides et leurs dérivés, et leurs mélanges, et,
le bloc **B** comportant au moins un segment hydrophobe pouvant être partiellement ou totalement hydrogéné, ledit bloc **B** étant obtenu au moins à partir de monomères **b,** identiques ou différents entre eux et choisis parmi les diènes, substitués ou non,
la liaison entre le bloc **A** et le bloc **B** étant effectuée soit au moyen d'une liaison covalente directe entre les blocs, soit au moyen d'une liaison moléculaire intermédiaire reliée à l'un de ces blocs par une première liaison covalente et à l'autre bloc par une seconde liaison covalente,
pour la préparation d'une composition bitumineuse sous forme d'une émulsion aqueuse.

14. Utilisation selon la revendication 13, d'un tensioactif polymère cationique **TC, caractérisée en ce que** le copolymère **Cp** est un copolymère dibloc ou tribloc, comprenant au moins un bloc **A** et au moins un bloc **B.**

15. Utilisation selon la revendication 14, d'un tensioactif polymère cationique **TC, caractérisée en ce que** le copolymère dibloc **A-B** répond à la formule **Aᵢ-Bⱼ,** et le copolymère tribloc **A-B-A** et **B-A-B** répond respectivement à la formule **Aᵢ-Bⱼ-Aₖ** et à la formule **Bⱼ-Aᵢ-Bₗ,** où :
- i et k sont compris entre 50 et 800 , et,
- j et l sont compris entre 150 et 850.

## Claims

1. Bituminous composition comprising at least one modified or non-modified bitumen, **characterised in that** it contains at least one polymeric cationic surface active agent **TC** comprising at least one sequenced copolymer **Cp** selected from sequenced copolymers comprising at least two blocks **A** and **B** linked to one another,
block **A** comprising at least one hydrophilic segment, said block **A** being obtained from at least monomers **a** which are identical or different from one another, comprising at least one nitrogen atom which is ionised or can be ionised in an acid medium, and selected from the group comprising:
- alkylamine, arylamine, alkyl ammonium, aryl ammonium and alkaryl ammonium (meth)acrylates;
- dialkyl amino ethyl (meth)acrylates;
- (meth)acrylamides and derivatives thereof and mixtures thereof, and
block **B** comprising at least one hydrophobic segment which can be partially or totally hydrogenated, said block **B** being obtained from at least monomers **b** which are identical or different from one another and selected from dienes, which may or may not be substituted,
the bond between block **A** and block **B** being obtained either by a direct covalent bond between the blocks or via an intermediate molecular bond linked to one of these blocks by a first covalent bond and to the other block by a second covalent bond,
the composition being in the form of an aqueous emulsion.

2. Bituminous composition as claimed in claim 1, **characterised in that** the monomers **a** comprising acrylate and methacrylate conform to the following general formula: 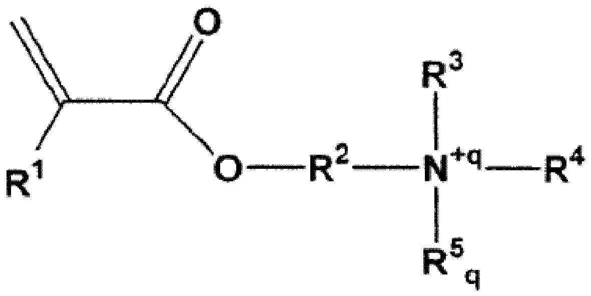 where:
- R¹ represents a hydrogen atom or a methyl group;
- R², being a divalent radical, represents an alkyl group, linear or branched, comprising 1 to 18 carbon atoms, a cycloalkyl group comprising 3 to 10 carbon atoms, an aryl group comprising 3 to 10 carbon atoms, an alkyl-cycloalkyl group comprising 3 to 18 atoms, the cycloalkyl part of which comprises 3 to 10 carbon atoms, or an arylalkyl group comprising 3 to 18 carbon atoms, the aryl part of which comprises 3 to 10 carbon atoms, which radical may be substituted or non-substituted;
- R³, R⁴ and R⁵, being monovalent radicals, represent, independently of one another, a hydrogen atom or an alkyl group, linear or branched, comprising 1 to 18 carbon atoms, a cycloalkyl group comprising 3 to 10 carbon atoms or an aryl group comprising 3 to 10 carbon atoms, an alkyl-cycloalkyl group comprising 3 to 18 carbon atoms, the cycloalkyl part of which comprises 3 to 10 carbon atoms, or an arylalkyl group comprising 3 to 18 carbon atoms, the aryl part of which comprises 3 to 10 carbon atoms, which radicals may be substituted or non-substituted, and q equals 0 or 1;
- or R³ represents a hydrogen atom and R⁴ represents a carbonyl group forming an amide group with the nitrogen atom, linear or branched, comprising 1 to 18 atoms, and q equals 0.

3. Bituminous composition as claimed in one of claims 1 or 2, **characterised in that** the monomer **b** is a conjugated diene.

4. Bituminous composition as claimed in claim 3, **characterised in that** the monomer **b** is selected from the group comprising butadiene, 2,3-dimethyl butadiene, isoprene, 1,3-pentadiene, 1,4-pentadiene, 1,4-hexadiene, 1,5-hexadiene, 1,9-decadiene, 5-methylene-2-norbornene, 5-vinyl-2-norbornene, 2-alkyl-2,5-norbornadienes, 5-ethylene-2-norbornene, 5-(2-propenyl)-2-norbornene, 5-(5-hexenyl)-2-norbornene and mixtures thereof.

5. Bituminous compound as claimed in any one of claims 1 to 4, **characterised in that** the surface active copolymer **Cp** has a degree of polymerisation DP of between 100 and 5000.

6. Bituminous compound as claimed in any one of claims 1 to 5, **characterised in that** the copolymer **Cp** is a two-block or three-block copolymer comprising at least one block **A** and at least one block **B.**

7. Bituminous composition as claimed in claim 6, **characterised in that** the two-block copolymer **A-B** conforms to the formula **Aᵢ-Bⱼ** and the three-block copolymer **A-B-A** and **B-A-B** conforms respectively to the formula **Aᵢ-Bⱼ-Aₖ** and formula **Bⱼ-Aᵢ-Bₗ,** in which:
- i and k are between 50 and 800 and
- j and I are between 150 and 850.

8. Bituminous composition as claimed in any one of claims 1 to 7, **characterised in that** the bitumen within the composition is modified by at least one polymer selected in particular from the group comprising:
- olefinic homopolymers and copolymers of ethylene, propylene, butylene, hexene, 4-methyl-1-pentene;
- elastomers such as ethylene propylene diene monomer (EPDM), ethylene propylene monomer (EPM), polyisobutylene, polybutadiene, polyisoprene;
- thermoplastic elastomers such as statistical or sequenced copolymers of styrene and butadiene, linear or in a star pattern (SBR, SBS), or styrene and isoprene (SIS), optionally crosslinked;
- poly(vinyl chloride);
- and copolymers of ethylene and vinyl acetate.

9. Bituminous composition as claimed in any one of claims 1 to 8, **characterised in that** the emulsion comprises:
- 0.1 to 20 % by weight of surface active agent **TC,**
- 20 to 90 % by weight of bitumen,
- at least 10 % by weight of water,
the sum of the percentages being equal to 100 %.

10. Method of preparing a bituminous emulsion as claimed in any one of claims 1 to 9, comprising the steps consisting of:
a) dissolving in an acid aqueous phase at least partially at least one surface active agent **TC** comprising at least one sequenced copolymer **Cp** selected from the sequenced copolymers comprising at least two blocks **A** and **B** linked to one another,
block **A** comprising at least one hydrophilic segment, said block **A** being obtained from at least monomers **a** which are identical or different from one another, comprising at least one nitrogen atom which is ionised or can be ionised in an acid medium, and selected from the group comprising:
- alkylamine, arylamine, alkyl ammonium, aryl ammonium and alkaryl ammonium (meth)acrylates;
- dialkyl amino ethyl (meth)acrylates;
- (meth)acrylamides and derivatives thereof and mixtures thereof, and
block **B** comprising at least one hydrophobic segment which can be partially or totally hydrogenated, said block B being obtained from at least monomers **b** which are identical or different from one another and selected from dienes, which may or may not be substituted,
the bond between block **A** and block **B** being obtained either by a direct covalent bond between the blocks or via an intermediate molecular bond linked to one of these blocks by a first covalent bond and to the other block by a second covalent bond,
b) then adding at least one modified or non-modified bitumen.

11. Bitumen-coated aggregates, preferably cold-coated, based on a mixture of granulates and at least one composition as claimed in any one of claims 1 to 9.

12. Bituminous coating with a base of at least one composition as claimed in any one of claims 1 to 9.

13. Use of a polymeric cationic surface active agent **TC** with a base of at least one sequenced copolymer **Cp** selected from sequenced copolymers comprising at least two blocks **A** and **B** linked to one another,
block **A** comprising at least one hydrophilic segment, said block **A** being obtained from at least monomers **a** which are identical or different from one another, comprising at least one nitrogen atom which is ionised or can be ionised in an acid medium, and selected from the group comprising:
- alkylamine, arylamine, alkyl ammonium, aryl ammonium and alkaryl ammonium (meth)acrylates;
- dialkyl amino ethyl (meth)acrylates;
- (meth)acrylamides and derivatives thereof and mixtures thereof,
and
block **B** comprising at least one hydrophobic segment which can be partially or totally hydrogenated, said block **B** being obtained from at least monomers **b** which are identical or different from one another and selected from dienes, which may or may not be substituted,
the bond between block **A** and block **B** being obtained either by a direct covalent bond between the blocks or via an intermediate molecular bond linked to one of these blocks by a first covalent bond and to the other block by a second covalent bond,
to prepare a bituminous composition in the form of an aqueous emulsion.

14. Use as claimed in claim 13, of a polymeric cationic surface active agent **TC, characterised in that** the copolymer **Cp** is a two-block or three-block copolymer comprising at least one block **A** and at least one block **B.**

15. Use as claimed in claim 14, of a polymeric cationic surface active agent **TC, characterised in that** the two-block copolymer **A-B** conforms to the formula **Aᵢ-Bⱼ** and the three-block copolymer **A-B-A** and **B-A-B** conforms respectively to the formula **Aᵢ-Bⱼ-Aₖ** and formula **Bⱼ-Aᵢ-Bₗ,** in which:
- i and k are between 50 and 800 and
- j and I are between 150 and 850.

## Patentansprüche

1. Bituminöse Zusammensetzung, umfassend mindestens ein modifiziertes oder nicht modifiziertes Bitumen, **dadurch gekennzeichnet, dass** sie mindestens ein polymeres Kationtensid **TC,** das mindestens ein Blockcopolymer **Cp,** das unter Blockcopolymeren mit mindestens zwei miteinander verbundenen Blöcken **A** und **B** ausgewählt ist, umfasst,
wobei der Block **A** mindestens ein hydrophiles Segment umfasst, wobei der Block **A** mindestens ausgehend von Monomeren **a,** die gleich oder voneinander verschieden sind und mindestens ein in saurem Medium ionisiertes oder ionisierbares Stickstoffatom umfassen und aus der Gruppe umfassend
- Alkylamin-, Arylamin-, Alkylammonium-, Arylammonium- und Alkylarylammonium(meth)-acrylate;
- Dialkylaminoethyl(meth)acrylate;
- (Meth)acrylamide und Derivate davon und Mischungen davon
ausgewählt sind, erhalten wird, und
wobei der Block **B** mindestens ein hydrophobes Segment, das teilweise oder vollständig hydriert sein kann, umfasst, wobei der Block **B** mindestens ausgehend von Monomeren **b,** die gleich oder voneinander verschieden sind und aus substituierten oder unsubstituierten Dienen ausgewählt sind, erhalten wird,
wobei die Bindung zwischen dem Block **A** und dem Block **B** entweder über eine direkte kovalente Bindung zwischen den Blöcken oder über eine dazwischenliegende molekulare Bindung, die über eine erste kovalente Bindung mit dem einen der Blöcke verknüpft ist und über eine zweite kovalente Bindung mit dem anderen der Blöcke verknüpft ist, erfolgt,
wobei die Zusammensetzung in Form einer wässrigen Emulsion vorliegt.

2. Bituminöse Zusammensetzung nach Anspruch 1, **dadurch gekennzeichnet, dass** die aus Acrylat und Methacrylat gebildeten Monomere **a** der folgenden allgemeinen Formel entsprechen: 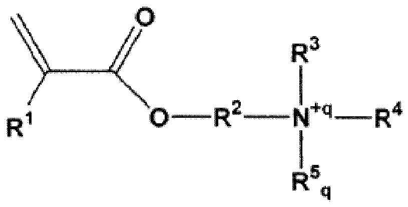 wobei:
- R¹ für ein Wasserstoffatom oder eine Methylgruppe steht;
- der zweiwertige Rest R² für eine lineare oder verzweigte Alkylgruppe mit 1 bis 18 Kohlenstoffatomen, eine Cycloalkylgruppe mit 3 bis 10 Kohlenstoffatomen, eine Arylgruppe mit 3 bis 10 Kohlenstoffatomen, eine Alkylcycloalkylgruppe mit 3 bis 18 Kohlenstoffatomen und 3 bis 10 Kohlenstoffatomen im Cycloalkylteil oder eine Arylalkylgruppe mit 3 bis 18 Kohlenstoffatomen und 3 bis 10 Kohlenstoffatomen im Arylteil steht, wobei der Rest substituiert oder unsubstituiert sein kann;
- die einwertigen Reste R³, R⁴ und R⁵ unabhängig voneinander für ein Wasserstoffatom oder eine lineare oder verzweigte Alkylgruppe mit 1 bis 18 Kohlenstoffatomen, eine Cycloalkylgruppe mit 3 bis 10 Kohlenstoffatomen, eine Arylgruppe mit 3 bis 10 Kohlenstoffatomen, eine Alkylcycloalkylgruppe mit 3 bis 18 Kohlenstoffatomen und 3 bis 10 Kohlenstoffatomen im Cycloalkylteil oder eine Arylalkylgruppe mit 3 bis 18 Kohlenstoffatomen und 3 bis 10 Kohlenstoffatomen im Arylteil stehen, wobei diese Reste substituiert oder unsubstituiert sein können; und q für 0 oder 1 steht;
- oder R³ für ein Wasserstoffatom steht und R⁴ für eine Carbonylgruppe steht, die mit dem Stickstoffatom eine Amidgruppe bildet, linear oder verzweigt ist und 1 bis 18 Kohlenstoffatome aufweist, und q für 0 steht.

3. Bituminöse Zusammensetzung nach Anspruch 1 oder 2, **dadurch gekennzeichnet, dass** es sich bei dem Monomer **b** um ein konjugiertes Dien handelt.

4. Bituminöse Zusammensetzung nach Anspruch 3, **dadurch gekennzeichnet, dass** das Monomer **b** aus der Gruppe umfassend Butadien, 2,3-Dimethylbutadien, Isopren, 1,3-Pentadien, 1,4-Pentadien, 1,4-Hexadien, 1,5-Hexadien, 1,9-Decadien, 5-Methylen-2-norbornen, 5-Vinyl-2-norbornen, 2-Alkyl-2,5-norbornadienen, 5-Ethylen-2-norbornen, 5-(2-Propenyl)-2-norbornen, 5-(5-Hexenyl)-2-norbornen und Mischungen davon ausgewählt ist.

5. Bituminöse Zusammensetzung nach einem der Ansprüche 1 bis 4, **dadurch gekennzeichnet, dass** das Tensidcopolymer **Cp** einen Polymerisationsgrad DP zwischen 100 und 5000 besitzt.

6. Bituminöse Zusammensetzung nach einem der Ansprüche 1 bis 5, **dadurch gekennzeichnet, dass** es sich bei dem Copolymer **Cp** um ein Diblock- oder Triblockcopolymer mit mindestens einem Block **A** und mindestens einem Block **B** handelt.

7. Bituminöse Zusammensetzung nach Anspruch 6, **dadurch gekennzeichnet, dass** das Diblockcopolymer **A-B** der Formel **Aᵢ-Bⱼ** entspricht und das Triblockcopolymer **A-B-A** und **B-A-B** der Formel **Aᵢ-Bⱼ-Aₖ** bzw. der Formel **Bⱼ-Aᵢ-B₁** entspricht, wobei:
- i und k zwischen 50 und 800 liegen und
- j und 1 zwischen 150 und 850 liegen.

8. Bituminöse Zusammensetzung nach einem der Ansprüche 1 bis 7, **dadurch gekennzeichnet, dass** das Bitumen in der Zusammensetzung durch mindestens ein Polymer modifiziert ist, das insbesondere aus der Gruppe umfassend
- Olefin-Homopolymere und -Copolymere von Ethylen, Propylen, Butylen, Hexen, 4-Methyl-1-penten;
- Elastomere wie Ethylen-Propylen-Dien-Monomer (EPDM), Ethylen-Propylen-Monomer (EPM), Polyisobutylen, Polybutadien, Polyisopren;
- thermoplastische Elastomere wie statistisch oder blockartig aufgebaute Copolymere von Styrol und Butadien, die linear oder sternförmig sind (SBR, SBS), oder von Styrol und Isopren (SIS), die gegebenenfalls vernetzt sind;
- Poly(vinylchlorid);
- und Copolymere von Ethylen und Vinylacetat ausgewählt ist.

9. Bituminöse Zusammensetzung nach einem der Ansprüche 1 bis 8, **dadurch gekennzeichnet, dass** die Emulsion
- 0,1 bis 20 Gew.-% Tensid **TC**,
- 20 bis 90 Gew.-% Bitumen,
- mindestens 10 Gew.-% Wasser
umfasst, wobei die Summe der Prozentanteile gleich 100% ist.

10. Verfahren zur Herstellung einer bituminösen Emulsion nach einem der Ansprüche 1 bis 9, bei dem man:
a) mindestens ein Tensid **TC,** das mindestens ein Blockcopolymer **Cp,** das unter Blockcopolymeren mit mindestens zwei miteinander verbundenen Blöcken **A** und **B** ausgewählt ist, umfasst, in einer sauren wässrigen Phase mindestens teilweise löst,
wobei der Block **A** mindestens ein hydrophiles Segment umfasst, wobei der Block **A** mindestens ausgehend von Monomeren **a,** die gleich oder voneinander verschieden sind und mindestens ein in saurem Medium ionisiertes oder ionisierbares Stickstoffatom umfassen und aus der Gruppe umfassend
- Alkylamin-, Arylamin-, Alkylammonium-, Arylammonium- und Alkylarylammonium(meth)-acrylate;
- Dialkylaminoethyl(meth)acrylate;
- (Meth)acrylamide und Derivate davon und Mischungen davon
ausgewählt sind, erhalten wird, und
wobei der Block **B** mindestens ein hydrophobes Segment, das teilweise oder vollständig hydriert sein kann, umfasst, wobei der Block **B** mindestens ausgehend von Monomeren **b,** die gleich oder voneinander verschieden sind und aus substituierten oder unsubstituierten Dienen ausgewählt sind, erhalten wird,
wobei die Bindung zwischen dem Block **A** und dem Block **B** entweder über eine direkte kovalente Bindung zwischen den Blöcken oder über eine dazwischenliegende molekulare Bindung, die über eine erste kovalente Bindung mit dem einen der Blöcke verknüpft ist und über eine zweite kovalente Bindung mit dem anderen der Blöcke verknüpft ist, erfolgt,
b) und dann mindestens ein modifiziertes oder nicht modifiziertes Bitumen zugibt.

11. Bituminöse Einbaudecken, vorzugsweise Kalteinbaudecken, auf der Basis einer Mischung von Zuschlägen und mindestens einer Zusammensetzung nach einem der Ansprüche 1 bis 9.

12. Bituminöser Anstrich auf der Basis mindestens einer Zusammensetzung nach einem der Ansprüche 1 bis 9.

13. Verwendung eines polymeren Kationtensids **TC,** das mindestens ein Blockcopolymer **Cp,** das unter Blockcopolymeren mit mindestens zwei miteinander verbundenen Blöcken **A** und **B** ausgewählt ist, umfasst,
wobei der Block **A** mindestens ein hydrophiles Segment umfasst, wobei der Block **A** mindestens ausgehend von Monomeren **a,** die gleich oder voneinander verschieden sind und mindestens ein in saurem Medium ionisiertes oder ionisierbares Stickstoffatom umfassen und aus der Gruppe umfassend
- Alkylamin-, Arylamin-, Alkylammonium-, Arylammonium- und Alkylarylammonium(meth)-acrylate;
- Dialkylaminoethyl(meth)acrylate;
- (Meth)acrylamide und Derivate davon und Mischungen davon
ausgewählt sind, erhalten wird, und
wobei der Block **B** mindestens ein hydrophobes Segment, das teilweise oder vollständig hydriert sein kann, umfasst, wobei der Block **B** mindestens ausgehend von Monomeren **b,** die gleich oder voneinander verschieden sind und aus substituierten oder unsubstituierten Dienen ausgewählt sind, erhalten wird,
wobei die Bindung zwischen dem Block **A** und dem Block **B** entweder über eine direkte kovalente Bindung zwischen den Blöcken oder über eine dazwischenliegende molekulare Bindung, die über eine erste kovalente Bindung mit dem einen der Blöcke verknüpft ist und über eine zweite kovalente Bindung mit dem anderen der Blöcke verknüpft ist, erfolgt,
zur Herstellung einer bituminösen Zusammensetzung in Form einer wässrigen Emulsion.

14. Verwendung nach Anspruch 13 eines polymeren Kationtensids **TC, dadurch gekennzeichnet, dass** es sich bei dem Copolymer **Cp** um ein Diblock- oder Triblockcopolymer mit mindestens einem Block **A** und mindestens einem Block **B** handelt.

15. Verwendung nach Anspruch 14 eines polymeren Kationtensids **TC, dadurch gekennzeichnet, dass** das Diblockcopolymer **A-B** der Formel **Aⱼ-Bⱼ** entspricht und das Triblockcopolymer **A-B-A** und **B-A-B** der Formel **Aⱼ-Bⱼ-Aₖ** bzw. der Formel **Bⱼ-Aⱼ-B₁** entspricht, wobei:
- i und k zwischen 50 und 800 liegen und
- j und 1 zwischen 150 und 850 liegen.
